# EUROPÄISCHE PATENTSCHRIFT

(11) **EP 2 532 521 B1**
(45) Veröffentlichungstag und Bekanntmachung des Hinweises auf die Patenterteilung: **01.03.2017**
(21) Anmeldenummer: 12167961.7
(22) Anmeldetag: 15.05.2012
(51) Int. Cl.: B41F 13/60, B41F 19/00, B41G 7/00, B65H 45/28, B26D 1/60, B23K 26/00, B26F 1/31

(54) **Beschnittvorrichtung zur Bearbeitung eines Bogenstapels und Druckmaschine oder Falzmaschine oder Papierbearbeitungsmaschine mit einer solchen**
Cutting device for processing a stack of sheets and printing machine or folding machine or paper processing machine with same
Dispositif de découpage pour le traitement d'une pile de feuilles et presse, plieuse ou machine de traitement du papier équipée de ce dispositif

(30) Priorität: 10.06.2011 DE 102011103979
(43) Veröffentlichungstag der Anmeldung: 12.12.2012
(73) Patentinhaber: Heidelberger Druckmaschinen AG, 69115 Heidelberg (DE)
(72) Erfinder: Beier, Dr., Bernard, 68526 Ladenburg (DE); Karl-Heinz, Filsinger, 69168 Wiesloch (DE); Temming, Stefan, 59348 Lüdinghausen (DE)

(56) Entgegenhaltungen:
- EP-A1- 1 184 127
- EP-A1- 1 588 864
- EP-A1- 2 100 736
- EP-A2- 2 113 383
- DE-A1- 4 442 411
- DE-A1- 19 520 713

## Beschreibung

Die Erfindung betrifft eine Beschnittvorrichtung mit den Merkmalen von Anspruch 1, eine Druckmaschine mit den Merkmalen von Anspruch 7, eine Bogenfalzmaschine mit den Merkmalen von Anspruch 8 und eine Papierbearbeitungsmaschine mit den Merkmalen von Anspruch 9.

### Stand der Technik

Die EP 1 475 334 A1 zeigt eine Falzmaschine mit einem Messerwellenpaar. Die Messerwellen sind parallel zueinander zwischen zwei im Abstand zueinander angeordneten Seitenwänden der Falzmaschine gelagert. Um gefalzte Papierbogen senkrecht zu einer Falzlinie, d. h. in Bogenlaufrichtung schneiden, perforieren, krimpen, rillen, nuten oder pressen zu können, sind den Falzwalzen eines Falzwerks Messerwellenpaare vor- bzw. nachgelagert. Nachfolgend werden die Begriffe Rillen und Nuten synonym verwendet. Gemeint ist eine Materialschwächung des Bogenmaterials durch Entfernen von Material wodurch der Querschnitt reduziert wird.

Bei den Messerwellen handelt es sich in der Regel um Messerwellenpaare, bei denen die eine Messerwelle mit Werkzeugen und die andere Messerwelle mit Gegenwerkzeugen bestückt ist. Die Werkzeuge sind auf Werkzeughaltern angebracht, welche auf die Messerwellen aufschiebbar sind.

Eine derartige Vorbereitung von zu falzenden Bogen ist erforderlich, um an den Sollpositionen der Falzbrüche eine Materialschwächung zu bewirken und somit sicherzustellen, dass die Falzbrüche tatsächlich an der vorgesehenen Position ausgeführt werden. Besonders bei dickeren Produkten kann es sonst zur Abweichung der Position der Falzbrüche kommen, was in Falzprodukten von geringerer Qualität resultiert.

Nachteilig an der Verwendung von Messerwellen ist zum einen deren aufwändige Einstellung auf die richtige Position. Bei Auftragswechseln kann es erforderlich sein, die Messerwellen aus den Falzmaschinen auszubauen, um zusätzliche Messerhalter auf die Messerwellen aufschieben zu können.

Weiter nachteilig ist, dass durch einer Taschenfalzstation vorgelagerte Messerwellen keine Falzvorbereitung für die in dieser Taschenfalzstation auszuführenden Falzbrüche vorgenommen werden kann. Dies ist darin begründet, dass durch die Messer der Messerwellen nur in Transportrichtung Schnitt- oder Perforations- oder Rilllinien erzeugt werden können, während die Falzbrüche senkrecht zur Transportrichtung ausgerichtet sind.

Damit ist es durch die bekannten Messerwellen nur möglich, eine Falzvorbereitung für in einer zweiten Taschenfalzstation auszuführende Falzbrüche vorzunehmen, wenn die zweite Taschenfalzstation in einem Winkel von 90° zur ersten Taschenfalzstation angeordnet ist. Aus der DE 44 42 411 B4 ist es bekannt, dass Bogen während des Transports durch eine Druckmaschine, insbesondere direkt vor dem Ausleger, von einer Lasereinheit bearbeitet werden, nämlich geschnitten, perforiert oder gerillt. Dabei arbeiten bekannte Laser zur Papierbearbeitung im Infrarot (IR)-Bereich, siehe DE 10 2008 030 457 A1.

Aus der DE 198 58 330 A1 geht eine Einrichtung zum Zuschneiden einer Materialbahn in Einzelbogen hervor. Die Schneideinrichtung, welche als Laserlichtquelle ausgeführt sein kann, ist auf einem Schlitten angeordnet, welcher auf einer Kurve sowohl in Transportrichtung als auch quer dazu bewegt wird. Die Geschwindigkeitskomponente in Transportrichtung entspricht dabei der Transportgeschwindigkeit des Bedruckstoffs, sodass ein Schnitt rechtwinklig zu den Bahnkanten erzeugt wird.

In der DE 327 613 PS wird beschrieben, dass bei zu falzenden Bogen an den Kreuzungspunkten von Falzbrüchen vorab kleine Ausschnitte gestanzt oder geschnitten werden können, was die Qualität der Falzbrüche erhöht.

Die DE 195 20 718 A1 zeigt eine Vorrichtung zum Perforieren von Bogen mittels Laserstrahlen. Dabei wird jeweils nur der oberste Bogen eines Stapels bearbeitet. Ist dieser Bogen fertig bearbeitet, so wird er abtransportiert.

### Aufgabenstellung

Aufgabe der vorliegenden Erfindung ist es, eine Beschnittvorrichtung zu schaffen, welche eine vereinfachte Vorbereitung der nachfolgend in einer Papierbearbeitungsmaschine zu bearbeitenden Bogen ermöglicht. Diese Beschnittvorrichtung soll in einer Druckmaschine, einer Bogenfalzmaschine oder einer Papierbearbeitungsmaschine verwendbar sein.

Gelöst wird diese Aufgabe durch eine Beschnittvorrichtung mit den Merkmalen von Anspruch 1, durch eine Druckmaschine mit den Merkmalen von Anspruch 7, durch eine Bogenfalzmaschine mit den Merkmalen von Anspruch 8 und durch eine Papierbearbeitungsmaschine mit den Merkmalen von Anspruch 9.

Die erfindungsgemäße Beschnittvorrichtung zur Bearbeitung eines Bogenstapels aus Bogen aus Papier, Karton, Kunststoff oder dergleichen besitzt ggfs. einen Stapelhalter zum Aufnehmen des Bogenstapels (welcher aus einer Mehrzahl von aufeinanderliegenden Bogen besteht), zumindest jedoch eine Lasereinheit mit einer Laserquelle zur Bearbeitung des Bogenstapels und eine Maschinensteuerung zur Ansteuerung der Lasereinheit. Der Lasereinheit ist eine Steuereinheit (Maschinensteuerung) zugeordnet, um die erforderlichen Betriebsparameter der einzelnen Laserquellen einzustellen wie z.B.

Ausgangsleistung, Zeitpunkt der Strahlung, Taktung bei gepulstem Betrieb.

Mittels der Lasereinheit lassen sich Schnitte und/oder Ausschnitte wie beispielsweise Löcher in die Bogen einbringen. Die Schnitte und/oder Ausschnitte sollen dabei eine nachfolgende Weiterverarbeitung vereinfachen, insbesondere einen Falzprozess. Die Bearbeitung des Bogens durch den Laserstrahl bzw. die Laserstrahlen der Lasereinheit bewirkt ein Vaporisieren, d.h. ein Verdampfen des Bogenmaterials. Die Lasereinheit ist dabei einfach und unkompliziert anzusteuern, sodass beliebige Geometrien von Schnitten und/oder Ausschnitten in die Bogen eingebracht werden können und auf die Verwendung von Messerwellen verzichtet werden kann. Im Gegensatz zur bekannten Bearbeitung von Einzelbogen werden erfindungsgemäß Bogenstapel bearbeitet. Dies ermöglicht es, dass in kurzer Zeit eine große Anzahl von Bogen für die nachfolgende Weiterverarbeitung vorbereitet werden kann.

In der erfindungsgemäßen Beschnittvorrichtung ist die Lasereinheit im Wesentlichen oberhalb oder alternativ unterhalb des Bogenstapels angeordnet. D.h. die Laserstrahlen können entweder von oben oder von unten auf den Stapel gerichtet sein.

In einer ersten Ausführungsvariante kann die Lasereinheit eine Laserquelle und einen bewegten Spiegel zum Lenken des Laserstrahls aufweisen. In einer zweiten Ausführungsvariante besitzt die Lasereinheit einen Laserkopf und eine Antriebseinrichtung zum Bewegen des Laserkopfs in einer Ebene im Wesentlichen parallel zum obersten oder untersten Bogen des Bogenstapels. In einer dritten Ausführungsvariante besitzt die Lasereinheit einen Laserbalken und eine Antriebseinrichtung zum Bewegen des Laserbalkens in einer Ebene im Wesentlichen parallel zum obersten oder untersten Bogen des Bogenstapels. In beiden letztgenannten Varianten ist die Antriebseinrichtung bevorzugt motorisch ausgeführt und erlaubt ein automatisiertes Bewegen der Lasereinheiten. In einer vierten Ausführungsvariante weist die Lasereinheit ein sich in einer Ebene im Wesentlichen parallel zum obersten Bogen des Bogenstapels flächig erstreckendes Laserarray auf.

In einer besonders vorteilhaften Weiterbildung der Beschnittvorrichtung ist in der Maschinensteuerung die Leistung der Lasereinheit hinterlegt und Informationen zu den Materialeigenschaften der Bogen und dem Bearbeitungsbedarf der Bogen sind der Maschinensteuerung zuführbar, wobei der Bearbeitungsbedarf den erforderlichen Umfang an Schnitt- und Bohrmustern meint. Basierend auf diesen Daten wird in der Maschinensteuerung die maximal bearbeitbare Höhe des Bogenstapels berechnet und/oder die bezüglich der Bearbeitungsleistung der Beschnittvorrichtung optimale Höhe des Bogenstapels bestimmt, d.h. es wird diejenige Bogenstapelhöhe bestimmt, bei welcher das Verhältnis von bearbeiteten Bogen zur Bearbeitungszeit am größten ist. Sowohl bei der maximalen Höhe als auch der idealen Höhe handelt es sich dabei um auftragsbezogene Daten, welche in einem Datenspeicher der Beschnittvorrichtung abspeicherbar sind. Wenn die Beschnittvorrichtung in eine Druckmaschine integriert ist (s.u.), so können im Ausleger der Druckmaschine Stapel der gewünschten Höhe gebildet werden. Wenn die Beschnittvorrichtung in eine Papierbearbeitungsmaschine integriert ist (s.u.), so können in der Bogenstapel- und Zwischenspeichereinheit der Papierbearbeitungsmaschine Stapel der gewünschten Höhe gebildet werden.

In einer vorteilhaften Weiterbildung der erfindungsgemäßen Beschnittvorrichtung besitzt der Stapelhalter Mittel zum exakten Ausrichten des Bogenstapels. Dabei kann es sich beispielsweise um Anschläge und/oder Kantengeradestoßer handeln.

In einer vorteilhaften Ausführungsform der Beschnittvorrichtung weist diese eine Einrichtung zum Bilden eines Bogenstapels, zum Zuführen des Bogenstapels in den Stapelhalter und zum Weitertransport des bearbeiteten Bogenstapels auf. Eine solche Beschnittvorrichtung kann dabei als Stand-Alone-Maschine ausgeführt sein.

Alternativ kann die oben beschriebene Beschnittvorrichtung auch in bekannte Papierbearbeitungsmaschinen integriert sein:
Gegenstand der Erfindung ist auch eine Druckmaschine, insbesondere eine Digitalbogendruckmaschine, mit einem Anleger, mindestens einer Druckstation und einem Bogenausleger. Der Bogenausleger verfügt dabei über eine wie oben beschriebene Beschnittvorrichtung zur Bearbeitung von Bogenstapeln. Damit wird ermöglicht, dass die bedruckten Bogen vor ihrer Weiterverarbeitung im Bogenausleger durch die Beschnittvorrichtung bereits für die Weiterverarbeitung vorbereitet werden. Dies hat den Vorteil, dass für das Vorsehen der Bogenbearbeitung keine zusätzliche Logistik, d.h. kein zusätzliches Handhaben der Bogen, erforderlich ist. Ein weiterer Vorteil ist, dass von der Maschinensteuerung der Druckmaschine sowohl die Druckstationen als auch die Beschnittvorrichtung angesteuert werden können.

Die Erfindung betrifft auch eine Bogenfalzmaschine mit einem Bogenanleger und mindestens einer Falzstation, welche als Taschenfalzstation oder Schwertfalzstation ausgeführt sein kann, wobei der Bogenanleger eine wie oben beschriebene Beschnittvorrichtung zur Bearbeitung von Bogenstapeln aufweist. Bei dem Bogenanleger kann es sich insbesondere um einen Palettenanleger oder um einen Stapelanleger handeln. Vorteilhaft dabei ist, dass die Bearbeitung der Bogen zeitlich als auch räumlich direkt vor dem nachfolgenden Falzprozess stattfindet. Dadurch kann ein zusätzliches Handhaben der Bogen vermieden werden. Ein weiterer Vorteil ist, dass von der Maschinensteuerung der Falzmaschine sowohl die Falzstationen als auch die Beschnittvorrichtung angesteuert werden können.

Die Erfindung betrifft auch eine Papierbearbeitungsmaschine mit einem Anleger, mindestens einer nachfolgenden Druckeinheit, einer nachfolgenden Bogenstapel- und Zwischenspeichereinheit, mindestens einer nachfolgenden Weiterverarbeitungseinheit, insbesondere einer Falzeinheit, und einem nachfolgenden Ausleger. Optional können die Falzprodukte vor dem Auslegen noch geheftet oder gebunden werden. Die Bogenstapel- und Zwischenspeichereinheit besitzt dabei erfindungsgemäß eine wie oben beschriebene Beschnittvorrichtung zur Bearbeitung von Bogenstapeln. Ohne den Materialfluss innerhalb der Papierbearbeitungsmaschine unterbrechen zu müssen, können Bogen so in der Bogenstapel- und Zwischenspeichereinheit zuerst gesammelt und dann von der Beschnittvorrichtung bearbeitet und damit für die nachfolgende Weiterverarbeitung vorbereitet werden.

Die beschriebene Erfindung und die beschriebenen vorteilhaften Weiterbildungen der Erfindung stellen auch in beliebiger Kombination miteinander vorteilhafte Weiterbildungen der Erfindung dar.

Hinsichtlich weiterer Vorteile und vorteilhafter Ausgestaltungen der Erfindung wird auf die Unteransprüche sowie die Beschreibung eines Ausführungsbeispiels unter Bezugnahme auf die beiliegenden Zeichnungen verwiesen.

### Ausführungsbeispiel

Die Erfindung soll an Hand eines Ausführungsbeispiels noch näher erläutert werden. Es zeigen in schematischer Darstellung
- Fig. 1:: eine Beschnittvorrichtung
- Fig. 2:: eine Beschnittvorrichtung mit integrierter Stapellogistik
- Fig. 3a:: eine Druckmaschine mit einer Beschnittvorrichtung
- Fig. 3b:: eine Falzmaschine mit einer Beschnittvorrichtung
- Fig. 3c:: eine Papierbearbeitungsvorrichtung mit einer Beschnittvorrichtung
- Figuren 4a bis 4c:: verschiedene Varianten der Lasereinheit

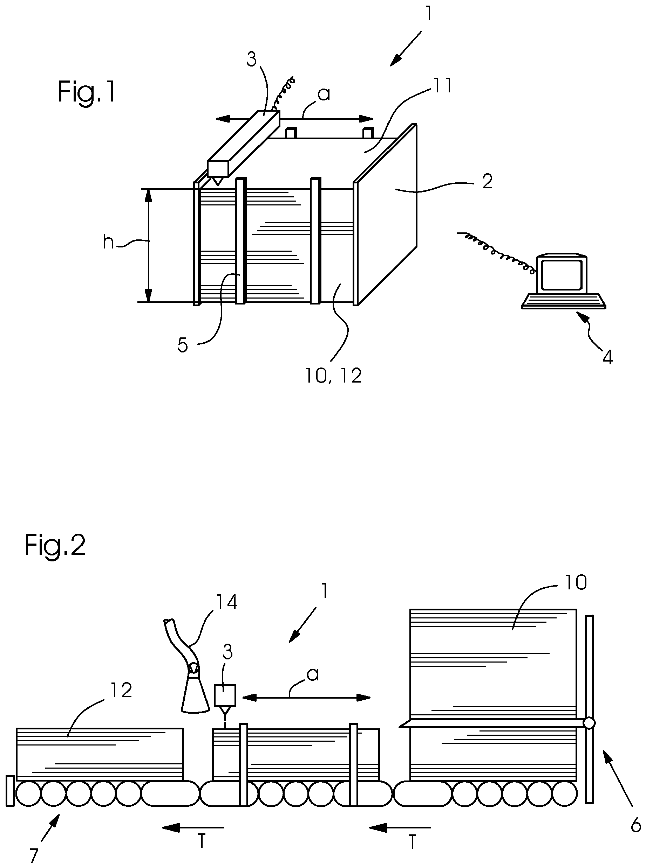

Fig. 1 zeigt eine erfindungsgemäße Beschnittvorrichtung 1. Diese besitzt einen Stapelhalter 2, welcher einen unbearbeiteten Bogenstapel 10 aufnimmt. Der Bogenstapel hat eine Stapelhöhe h. Zum genauen Ausrichten des Bogenstapels 10 relativ zum Stapelhalter 2 sind Anschläge 5 vorgesehen. Oberhalb des obersten Bogens 11 des Bogenstapels 10 befindet sich eine Lasereinheit 3, welche in der vorliegenden Darstellung als Laserbalken ausgeführt ist. Die Lasereinheit 3 ist dabei wie durch den Doppelpfeil a gezeigt in einer Ebene parallel zum obersten Bogen 11 verschieblich, sodass von der Lasereinheit 3 ausgesendete Laserstrahlen jeden Punkt des Bogens 11 erreichen können. Um sicherzustellen, dass alle Bogen des Bogenstapels 10 von der Lasereinheit 3 mit Schnitten und/oder Ausschnitten versehen werden, d.h. auch der unterste Bogen 11, darf die Höhe h des Bogenstapels 10 nicht zu groß werden. Die Stapelhöhe h ist dabei abhängig von der Leistungsfähigkeit der Lasereinheit 3 und den Materialeigenschaften der Bogen 11 und kann von einer Maschinensteuerung 4 berechnet werden. Zur Bearbeitung des Bogenstapels 10 wird die Lasereinheit 3 verschoben durch eine Verschiebebewegung a. Sobald der Bogenstapel 12 alle erforderlichen Schnitte und/oder Ausschnitte erfahren hat, kann dieser dem Stapelhalter 2 entnommen und der Weiterverarbeitung zugeführt werden. Ein nächster unbearbeiteter Bogenstapel 10 kann dann in den Stapelhalter 2 eingeführt und ebenfalls bearbeitet werden.

Mit der Lasereinheit 3 kann eine Absaugeinheit 14 gekoppelt sein, zum Absaugen der bei der Laserbearbeitung entstehenden Gase und Partikel.

In Fig. 2 ist eine weiterentwickelte Beschnittvorrichtung 1 dargestellt, welche über ein Logistiksystem zum automatischen Zuführen von unbearbeiteten Bogenstapeln 10 und zum Abführen der bereits bearbeiteten Bogenstapel 12 verfügt. Erforderlich ist dazu eine Einrichtung 6 zum Bilden eines Bogenstapels 10 mit Zuführeinrichtung, welche - in Transportrichtung T gesehen - stromaufwärtig der Beschnittvorrichtung 1 angeordnet ist. Stromabwärtig der Beschnittvorrichtung 1 ist eine Einrichtung zum Weitertransport 7 vorgesehen, welche den bearbeiteten Bogenstapel 12 beispielsweise direkt einer nachfolgenden Weiterverarbeitungsmaschine zuführen kann.

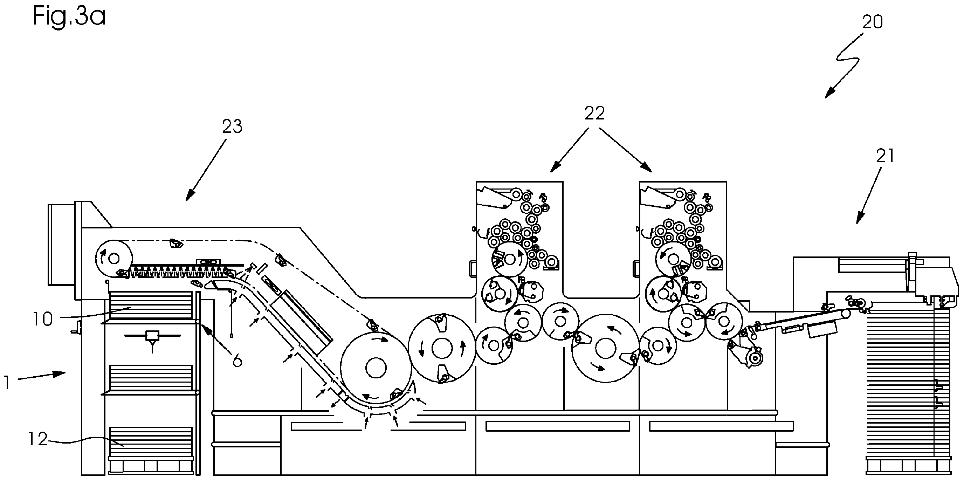

Fig. 3a zeigt eine Druckmaschine 20 mit einem Anleger 21, einer Mehrzahl von Druckeinheiten 22 und einem Bogenausleger 23. Im Bereich des Auslegers 23 ist eine Einrichtung 6 zum Bilden eines Bogenstapels vorgesehen. Sobald ein Bogenstapel 10 seine vorgesehene Stapelhöhe h erreicht, wird dieser von der Einrichtung 6 in den Wirkbereich der Lasereinheit der Beschnittvorrichtung 1 weitergegeben, und in die Bogen des Bogenstapels können Schnitte und/oder Ausschnitte eingebracht werden. Nach erfolgter Bearbeitung des Bogenstapels 12 wird dieser im Ausleger 23 auf dem Auslagestapel abgelegt.

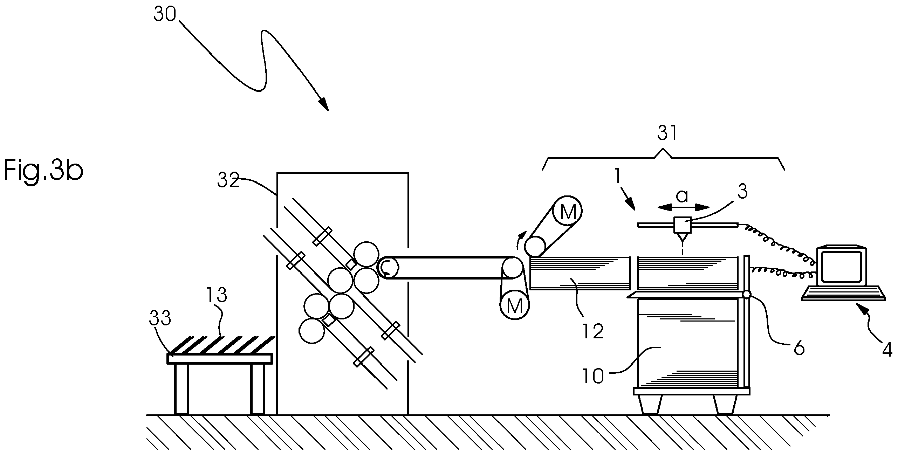

Fig. 3b zeigt eine Falzmaschine 30 mit einem Bogenanleger 31, einer Falzstation 32 und einem Ausleger 33. Der Bogenanleger 31 verfügt über eine Einrichtung 6 zum Bilden eines Bogenstapels 10. Dabei kann es vorgesehen sein, dass die Einrichtung 6 zum Bilden eines Bogenstapels vom Gesamtstapel der unbearbeiteten Bogen 11 einen Teilstapel mit einer Stapelhöhe h abtrennt. Dieser Teilstapel wird dann von der Lasereinheit der Beschnittvorrichtung 1 bearbeitet, sprich: die Bogen des Stapels werden mit Schnitten und/oder Ausschnitten versehen. Der so bearbeitete Bogenstapel 12 kann dann weiter transportiert werden. Durch bekannte Vereinzelungsmechanismen können dann von dem Stapel 12 Einzelbogen abgehoben und mittels eines Zuführtischs der Falzstation 32 zugeführt werden. Die Ansteuerung der Falzmaschine 30 und auch ihrer Komponenten Beschnittvorrichtung 1 und Einrichtungen zum Bilden eines Bogenstapels 6 erfolgt dabei über eine Maschinensteuerung 4.

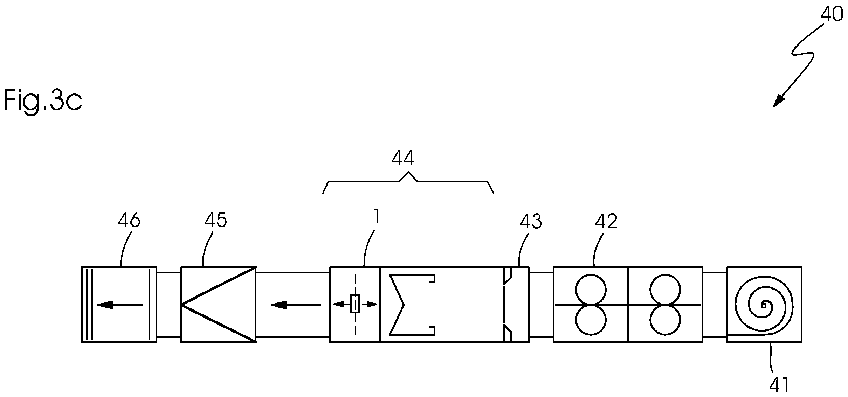

Fig. 3c zeigt eine Papierbearbeitungsmaschine 40, welche auch als Fertigungssystem bezeichnet werden kann. Diese besitzt einen Anleger 41, welcher im vorliegenden Beispiel als Rollenanleger ausgeführt ist. Der Bedruckstoff wird in nachfolgenden Druckeinheiten 42 bedruckt, wobei im vorliegenden Beispiel zwei Rollendruckeinheiten dargestellt sind. Die so bedruckte Bahn erfährt in der nachfolgenden Zuschnitteinrichtung 43 einen Zuschnitt in Einzelbogen. Handelt es sich bei dem Anleger 41 um einen Bogenanleger und bei den Druckeinheiten 42 um Bogendruckeinheiten, so kann die Zuschnitteinrichtung 43 entfallen. Nachfolgend werden die Bogen in einer Bogenstapel- und Zwischenspeichereinheit 44 gesammelt und Stapel gebildet. In dieser Bogenstapel- und Zwischenspeichereinheit 44 ist eine Beschnittvorrichtung 1 integriert, welche die Bogen der gebildeten Stapel mit Schnitten und/oder Ausschnitten versieht, zur Vorbereitung für die nachfolgende Weiterverarbeitung. Während in der Darstellung von Fig. 3c nur eine Falzeinheit 45 für die Weiterverarbeitung vorgesehen ist, kann hier selbstverständlich auch eine Vielzahl von Falzeinheiten 45 verwendet werden. Die so gebildeten Druckprodukte werden in einem Ausleger 46 ausgelegt.

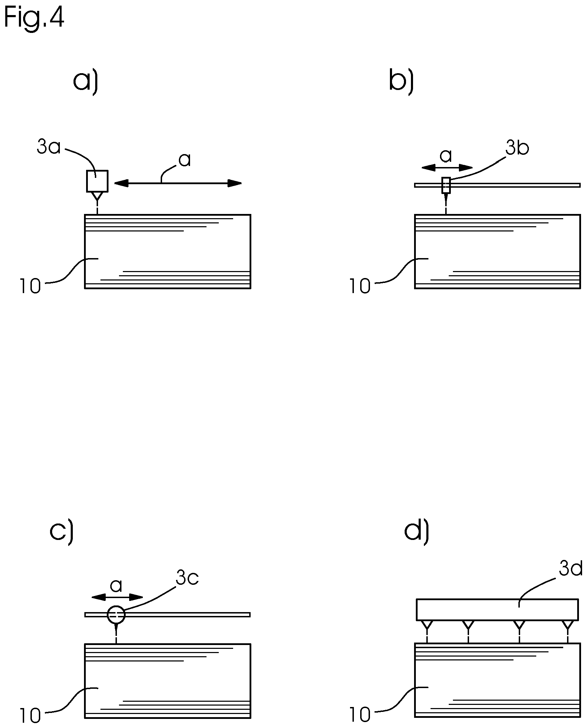

Die Figuren 4a bis 4c zeigen verschiedene Varianten der Lasereinheit 3:
Fig. 4a zeigt einen verschieblichen Laserbalken, Fig. 4b einen verschieblichen Laserkopf 3b, Fig. 4c einen Laserkopf mit Mehrachsenspiegelsystem 3c, einen sogenannten Galvohead und Fig. 4d ein Laserarray 3d. Diese Varianten können in den zuvor beschriebenen Maschinen eingesetzt werden.

### Bezugszeichenliste

- 1: Beschnittvorrichtung
- 2: Stapelhalter
- 3: Lasereinheit
- 3a: Laserbalken
- 3b: verschieblicher Laserkopf
- 3c: Laserkopf mit Mehrachsenspiegelsystem
- 3d: Laserarray
- 4: Maschinensteuerung
- 5: Anschläge zum Ausrichten
- 6: Einrichtung zum Bilden eines Bogenstapels mit Zuführeinrichtung
- 7: Einrichtung zum Weitertransport
- 10: Bogenstapel
- 11: Bogen
- 12: bearbeiteter Bogenstapel
- 13: Falzprodukt
- 14: Absaugeinheit

- 20: Druckmaschine
- 21: Anleger
- 22: Druckeinheit
- 23: Ausleger

- 30: Falzmaschine
- 31: Bogenanleger
- 32: Falzstation
- 33: Ausleger

- 40: Papierbearbeitungsmaschine/Fertigungssystem
- 41: Anleger
- 42: Druckeinheit
- 43: Zuschnitteinrichtung
- 44: Bogenstapel- und Zwischenspeichereinheit
- 45: Falzeinheit
- 46: Ausleger
- a: Verschiebebewegung
- h: Stapelhöhe
- T: Transportrichtung

## Patentansprüche

1. Beschnittvorrichtung (1) zur Bearbeitung eines Bogenstapels (10) aus Bogen (11) insbesondere aus Papier, Karton und Kunststoff mit einer Lasereinheit (3) zur Bearbeitung des Bogenstapels (10) aus einer Mehrzahl von aufeinander liegenden Bogen, wobei Laserstrahlen auf den Stapel gerichtet sind und einer Maschinensteuerung (4) zum Ansteuern der Lasereinheit (3), wobei die Bearbeitung ein Einbringen von Schnitten und/oder Ausschnitten in die Bogen (11) umfasst, durch Vaporisieren des Materials der Bogen, und einen Stapelhalter (2) zum Aufnehmen des zu bearbeitenden Bogenstapels (10), während der Bearbeitung,
und wobei die Lasereinheit (3) im Wesentlichen oberhalb oder unterhalb des Bogenstapels (10) angeordnet ist.

2. Beschnittvorrichtung nach Anspruch 1,
**dadurch gekennzeichnet,**
**dass** die Lasereinheit (3) einen Laserbalken (3a) oder einen Laserkopf (3b) aufweist und eine Antriebseinrichtung zum Bewegen des Laserbalkens (3a) bzw. des Laserkopfes (3b) in einer Ebene im Wesentlichen parallel zum obersten oder untersten Bogen des Bogenstapels (10).

3. Beschnittvorrichtung nach Anspruch 1,
**dadurch gekennzeichnet,**
**dass** die Lasereinheit (3) ein sich in einer Ebene im Wesentlichen parallel zum obersten oder untersten Bogen des Bogenstapels (10) flächig erstreckendes Laserarray (3d) aufweist.

4. Beschnittvorrichtung nach einem der vorangehenden Ansprüche,
**dadurch gekennzeichnet,**
**dass** in der Maschinensteuerung (4) die Leistung der Lasereinheit (3) hinterlegt ist und Informationen zu den Materialeigenschaften der Bogen (11) und Informationen zu dem Bearbeitungsbedarf der Bogen der Maschinensteuerung (4) zuführbar sind zur Berechnung der maximal bearbeitbaren Höhe (h) des Bogenstapels (10) und/oder zur Bestimmung der Höhe (h) des Bogenstapels (10), bei welcher das Verhältnis von bearbeiteten Bogen (11) zur Bearbeitungszeit am größten ist, wobei Bearbeitungsbedarf den erforderlichen Umfang an Schnitt- und Bohrmustern meint.

5. Beschnittvorrichtung nach einem der vorangehenden Ansprüche,
**dadurch gekennzeichnet,**
**dass** der Stapelhalter (2) Mittel (5) zum exakten Ausrichten des Bogenstapels (10) aufweist.

6. Beschnittvorrichtung nach einem der vorangehenden Ansprüche,
**dadurch gekennzeichnet,**
**dass** die Beschnittvorrichtung (1) eine Einrichtung (6) zum Bilden eines Bogenstapels (10), zum Zuführen des Bogenstapels (10) in den Stapelhalter (2) und zum Weitertransport des bearbeiteten Bogenstapels (12) aufweist.

7. Druckmaschine (20), insbesondere Digitalbogendruckmaschine, mit einem Anleger (21), mindestens einer Druckstation (22) und einem Bogenausleger (23),
**dadurch gekennzeichnet,**
**dass** der Bogenausleger (23) eine Beschnittvorrichtung (1) nach einem der Ansprüche 1-6 besitzt.

8. Bogenfalzmaschine (30) mit einem Bogenanleger (31) und mindestens einer Falzstation,
**dadurch gekennzeichnet,**
**dass** der Bogenanleger (31) eine Beschnittvorrichtung (1) nach einem der Ansprüche 1 bis 6 besitzt.

9. Papierbearbeitungsmaschine (40) umfassend einen Anleger (41), mindestens eine nachfolgende Druckeinheit (42), eine nachfolgende Bogenstapel- und Zwischenspeichereinheit (44), mindestens eine nachfolgende Weiterverarbeitungseinheit (45), insbesondere Falzeinheit, und einen nachfolgenden Ausleger (46),
**dadurch gekennzeichnet,**
**dass** die Bogenstapel- und Zwischenspeichereinheit (44) eine Beschnittvorrichtung (1) nach einem der Ansprüche 1 bis 6 besitzt.

## Claims

1. Cutting device (1) for processing a sheet stack (10) of sheets (11), in particular sheets of paper, cardboard, and synthetic material, having a laser unit (3) for processing the sheet stack (10) of a plurality of sheets resting on top of one another, wherein laser beams are directed towards the stack, the cutting device (1) further having a machine control (4) for actuating the laser unit (3), wherein the processing comprises the creation of cuts and/or cutouts in the sheets (11) by vaporizing the material of the sheets, the cutting device (1) further having a stack holder (2) for receiving the sheet stack (10) to be processed during the processing,
and wherein the laser unit (3) is disposed essentially above or underneath the sheet stack (10).

2. Cutting device according to claim 1,
**characterized in**
**that** the laser unit (3) includes a laser bar (3a) or a laser head (3b) and a driving device for moving the laser bar (3a) or laser head (3b) in a plane essentially parallel to the uppermost or lowermost sheet in the sheet stack (10).

3. Cutting device according to claim 1,
**characterized in**
**that** the laser unit (3) includes a two-dimensional laser array (3d) extending essentially in parallel with the uppermost or lowermost sheet in the sheet stack (10).

4. Cutting device according to any one of the preceding claims,
**characterized in**
**that** the power of the laser unit (3) is saved on the machine control (4) and that information on the properties of the sheets (11) and information on the processing requirements of the sheets are feedable to the machine control (4) to calculate the maximum treatable height (h) of the sheet stack (10) and/or to determine the height (h) of the sheet stack (10) at which the ratio of treated sheets (11) and processing time is greatest, wherein the processing requirement means the required extent of cutting and drilling patterns.

5. Cutting device according to any one of the preceding claims,
**characterized in**
**that** the stack holder (2) includes means (5) for an accurate alignment of the sheet stack (10).

6. Cutting device according to any one of the preceding claims,
**characterized in**
**that** the cutting device (1) includes a device (6) for forming a sheet stack (10), for feeding the sheet stack (10) to the stack holder (2) and for transporting the processed sheet stack (12) onwards.

7. Printing machine (20), in particular a digital sheet-fed printing machine, having a feeder (21), at least one printing unit (22) and a sheet delivery (23),
**characterized in**
**that** the sheet delivery (23) includes a cutting device (1) according to any one of claims 1 to 6.

8. Sheet-fed folding machine (30) having a sheet feeder (31) and at least one folding unit,
**characterized in**
**that** the sheet feeder (31) includes a cutting device (1) according to any one of claims 1 to 6.

9. Machine for processing paper (40) comprising a feeder (41), at least one downstream printing unit (42), a downstream sheet stacking and buffering unit (44), at least one downstream further processing unit (45), in particular a folding unit, and a downstream delivery (46),
**characterized in**
**that** the sheet stacking and buffering unit (44) includes a cutting device (1) according to any one of claims 1 to 6.

## Revendications

1. Dispositif de coupe (1) pour le traitement d'une pile de feuilles (10) en particulier en papier, carton et matière plastique avec une unité laser (3) pour le traitement de la pile de feuilles constituée d'une pluralité de feuilles superposées, des rayons laser étant dirigés sur la pile, et une commande de machine (4) pour commander l'unité laser (3), le traitement comprenant la réalisation de coupes et/ou découpes dans les feuilles (11), par vaporisation du matériau des feuilles, et un support de pile (2) pour recevoir la pile de feuilles à traiter, pendant le traitement,
et l'unité laser étant disposée au-dessus ou au-dessous de la pile de feuille (10).

2. Dispositif de coupe selon la revendication 1,
**caractérisé en ce**
**que** l'unité laser (3) présente une colonne laser (3a) ou une tête laser (3b) et un dispositif d'entraînement pour le déplacement de la colonne laser (3a) respectivement de la tête laser (3b) dans un plan sensiblement parallèle à la feuille la plus haute ou la plus basse de la pile (10).

3. Dispositif de coupe selon la revendication 1,
**caractérisé en ce**
**que** l'unité laser (3) présente une colonne laser (3a) ou une tête laser (3b) et un dispositif de réseau laser (3d) s'étendant sensiblement parallèlement entre la feuille de dessus ou la feuille du bas de la pile (10).

4. Dispositif selon l'une des revendications précédentes, **caractérisé en ce**
**que** la puissance de l'unité laser (3) est déposée dans la commande de machine (4) et des informations sur les propriétés du matériau des feuilles (11) ainsi que sur le besoin de traitement de la commande machine (4) peuvent être fournies pour le calcul de la hauteur (h) de la pile de feuille (10), où le rapport entre les feuilles traitées (11) et le temps de traitement est le plus important, le temps de traitement signifiant l'étendue nécessaire en modèle de coupes et de perforations.

5. Dispositif selon l'une des revendications précédentes,
**caractérisé en ce**
**que** le support de pile (2) présente des moyens (5) pour l'alignement exacte de la pile de feuilles (10).

6. Dispositif de coupe selon la revendication 1,
**caractérisé en ce**
**que** le dispositif de coupe (1) présente un dispositif (6) pour la formation d'une pile de feuilles (10), pour l'amenée de la pile de feuilles (10) et pour le transport de la pile de feuilles traitées (12) .

7. Machine d'impression (20), en particulier une machine d'impression de feuilles numérique, comprenant un margeur (21), au moins un poste d'impression (22) et un poste receveur (23),
**caractérisée en ce**
**que** le receveur de feuilles (23) présente un dispositif de coupe (1) selon l'une des revendications 1 à 6.

8. Machine de pliage de feuilles (30) avec un margeur de feuilles (31) et au moins un poste de pliage,
**caractérisée en ce que**
le margeur de feuille (31) possède un dispositif de coupe selon l'une des revendications 1 à 6.

9. Machine de traitement de papier (40) comprenant un margeur (41), au moins une unité d'impression successive (42), une unité de stockage intermédiaire (44), au moins une unité de traitement suivante (45), en particulier une unité de pliage, et un receveur de feuilles en aval (46),
**caractérisée en ce**
**que** l'unité de piles de feuilles et de stockage intermédiaire (44) présente un dispositif de coupe (1) selon l'une des revendications 1 à 6.
